# EUROPÄISCHE PATENTSCHRIFT

(11) **EP 3 105 189 B1**
(45) Veröffentlichungstag und Bekanntmachung des Hinweises auf die Patenterteilung: **01.04.2020**
(21) Anmeldenummer: 15707567.2
(22) Anmeldetag: 12.02.2015
(51) Int. Cl.: C02F 1/42

(54) **VORRICHTUNG ZUR WASSERAUFBEREITUNG**
DEVICE FOR WATER TREATMENT
DISPOSITIF DE TRAITEMENT DE L'EAU

(30) Priorität: 14.02.2014 DE 102014101890
(43) Veröffentlichungstag der Anmeldung: 21.12.2016
(73) Patentinhaber: BWT AG, 5310 Mondsee (AT)
(72) Erfinder: JOHANN, Jürgen, 69226 Nussloch (DE); BISSEN, Monique, A-5310 Mondsee (AT); PICHLER, Markus, A-5020 Salzburg (AT)
(74) Vertreter: Friderichs, Gunther
(86) Internationale Anmeldenummer: PCT/EP2015/052963
(87) Internationale Veröffentlichungsnummer: WO 2015/121349

(56) Entgegenhaltungen:
- GB-A- 2 498 987
- US-A- 6 099 735
- US-B1- 7 514 004
- US-B1- 8 097 159

## Beschreibung

### Gebiet der Erfindung

Die Erfindung betrifft eine Vorrichtung zur Aufbereitung von Trinkwasser welche insbesondere im Haushaltsbereich verwendet wird.

Insbesondere betrifft die Erfindung eine Vorrichtung zur Teilentsalzung bzw. Wasseraufbereitung von Trinkwasser, welche in einer Kanne zur Aufbewahrung von Wasser, insbesondere von Trinkwasser, aber auch von demineralisiertem Wasser verwendet wird. Weiter kann die Erfindung beispielsweise auch zur Teilentsalzung bzw. Entcarbonisierung des Wassers in einem Tank verwendet werden, wie dieser insbesondere bei Maschinen zur Zubereitung von Heißgetränken, insbesondere von Kaffeevollautomaten, verwendet wird.

### Hintergrund der Erfindung

Vorrichtungen zur Wasseraufbereitung, welche insbesondere in Haushaltsgeräten Verwendung finden, sind bekannt.

Eine häufig verwendete Anwendung sind schwerkraftbetriebene Trinkwasserfilter. Diese bestehen in der Regel aus einer Kanne mit einem Trichter. In den Trichter wird eine Kartusche, die zumindest ein Ionenaustauschermaterial enthält, eingesetzt und das Wasser durchläuft aufgrund seiner Schwerkraft die Kartusche, sammelt sich in der Kanne und kann sodann verwendet werden. So aufbereitetes, meist entcarbonisiertes Wasser wird beispielsweise zur Zubereitung von Heißgetränken, wie Tee, verwendet. Bei Tee kann durch die Verwendung von entcarbonisiertem Wasser die sonst typische Schlierenbildung damit weitgehend verhindert werden.

Neben einer Entcarbonisierung dienen derartige Vorrichtungen in vielen Fällen auch zur Entfernung von organischen Wasserinhaltsstoffe, wie zum Beispiel Pestizide und /oder Chlor aus dem Trinkwasser Wassers. Hierzu wird in der Regel Aktivkohle verwendet.

Nachteilig an derart schwerkraftbetriebenen Vorrichtungen hat sich gezeigt, dass die Durchflussgeschwindigkeit ungleichmäßig ist. So verlangsamt sich naturgemäß gegen Ende des Filtervorgangs der Durchfluss dadurch, dass die über der Kartusche stehende Wassersäule kleiner ist. Weiter kommt es durch entstehende Gasblasen zu einer Behinderung des Durchflusses, wodurch die Durchflusszeit ebenfalls beeinflusst wird. Die variierende Durchflusszeit beeinflusst naturgemäß das Ergebnis des Filtervorgangs.

In der Patentschrift US 8,097,159 B1 wird der Durchfluss durch Erhöhen des Drucks im Rohwasserreservoir verbessert. Zur Druckerhöhung wird eine Luftpumpe verwendet.

Besonders problematisch ist die Verwendung von sogenannten Ultrafiltern. Dies sind Membranen, die derart fein sind, dass Bakterien das Filtermaterial nicht passieren können. Die Verwendung derartiger Membranen resultiert bei schwerkraftbetriebenen Filtern vielfach in einer derart langen Durchlaufzeit, dass die Verwendung für den Benutzer äußerst unkomfortabel ist. Es besteht darüber hinaus die Gefahr, dass der Durchfluss sogar ganz zum Stehen kommt. Weiter bekannt sind Kartuschen zur Aufbereitung und Entcarbonisierung von Wasser, welche in Automaten zur Zubereitung von Heißgetränken verwendet werden. Insbesondere werden derartige Kartuschen in Kaffeevollautomaten verwendet. Derartige Kartuschen werden in der Regel innerhalb des Tanks der Maschine auf einen Einsaugstutzen aufgesetzt.

Nachteilig ist dabei zum einen, dass jeder Hersteller ein anderes Kartuschensystem verwendet, so dass die im Handel verfügbaren Kartuschen nicht universal verwendet werden können.

Weiter nachteilig ist, dass das im Tank befindliche Wasser zwar gereinigt wird, wenn dieses zur Zubereitung eines Getränks durch einen Filter in die Maschine gesaugt wird. Im Tank selbst befindet sich aber nicht entcarbonisiertes bzw. enthärtetes Wasser. Dies hat zur Folge, dass es im Tank zu unschönen Bildungen von Kalkkrusten kommen kann. Dieser Effekt wird durch Verdunstung des Wassers verstärkt.

### Aufgabe der Erfindung

Der Erfindung liegt demgegenüber die Aufgabe zugrunde, eine Vorrichtung zur Wasseraufbereitung bereitzustellen, bei welcher die genannten Nachteile des Standes der Technik zumindest reduziert sind.

### Zusammenfassung der Erfindung

Die Erfindung betrifft eine Vorrichtung zur Wasseraufbereitung.
Die Vorrichtung zur Wasseraufbereitung ist insbesondere als Wasserhaushaltsfilter mit einer Kanne ausgebildet.

Die Vorrichtung zur Wasseraufbereitung umfasst eine Kartusche mit einem Ionenaustauschermaterial.

Weiter umfasst die Vorrichtung zur Wasseraufbereitung Fördermittel zum Ansaugen von Wasser und Leiten des Wassers durch die Kammer mit dem Ionenaustauschermaterial.

Mithin wird gemäß der Erfindung das Wasser durch Fördermittel durch das Ionenaustauschermaterial hindurch gepumpt.

Weiter weist die Vorrichtung zur Wasseraufbereitung magnetische Mittel auf, um die Fördermittel durch eine Wand hindurch anzutreiben.

Die Erfindung betrifft mithin eine Pumpe, mittels der Wasser durch das Ionenaustauschermaterial hindurch pumpbar ist. Zwischen einem Teil der Pumpe, insbesondere einem Laufrad, und einem anderen Teil der Pumpe, welcher elektrisch angetrieben wird, insbesondere einem Elektromotor, sind magnetische Mittel angeordnet, so dass die Fördermittel durch eine Wand hindurch angetrieben werden können.

Dies können beispielsweise Magnete oder ferromagnetische Bauteile auf einem Laufrad sein.

So ist es möglich, die Fördermittel in einer nassen Zone anzuordnen, wohingegen der Antriebsmotor in einem trockenen Bereich angeordnet ist.

Vorzugsweise sind zumindest die Antriebsmittel für die Fördermittel in einem hermetisch verschlossenen Gehäuse angeordnet. Dieses Gehäuse bildet den trockenen Bereich für den Antriebsmotor, welcher über magnetische Mittel die Fördermittel, insbesondere ein Laufrad, antreibt.

Erfindungsgemäß umfasst die Vorrichtung zur Wasseraufbereitung ein weiteres Gehäuse, welches auf der Außenseite des Behälters mit Wasser gegenüber dem ersten Gehäuse platzierbar ist und welches magnetische Mittel, also zumindest einen Magnet oder ein ferromagnetisches Bauteil, aufweist, um die Fördermittel anzutreiben.

Hierbei befinden sich stromführende Bauteile komplett außerhalb des Behälters mit Wasser, also beispielsweise des Tanks oder der Kanne, in welcher das Wasser aufbereitet werden soll.

Auf diese Weise braucht das weitere Gehäuse nicht hermetisch verschlossen sein und kann insbesondere zur Stromversorgung einen Netzanschluss aufweisen.

Denkbar ist aber auch, die Vorrichtung mittels einer Batterie oder eines Akkus zu betreiben.

Bei Weiterbildungen der Erfindung weisen erstes und weiteres Gehäuse magnetische Mittel auf, über welches sich erstes und weiteres Gehäuse anziehen.

So sind erstes und weiteres Gehäuse auf einfache Weise an einer Wand befestigbar.

Über gegenüberliegende Magnete kann insbesondere sichergestellt werden, dass sich die gegenüberliegenden Gehäuse auf in etwa immer derselben Position befinden, so dass sich auch die magnetischen Mittel zum Antreiben der Fördermittel gegenüberliegen.

Das Ionenaustauschermaterial kann als schwach saures Ionenaustauscherharz, als stark saures bzw. stark basisches Ionenaustauschermaterial und als Mischbettionenaustauscher ausgebildet sein.

Es versteht sich, dass im Sinne der Erfindung die Kartusche außer dem Ionenaustauschermaterial noch weitere Bestandteile zur Wasseraufbereitung enthalten kann, wie beispielsweise Stoffe zur Desinfektion des Wassers, und zur Adsorption organischer Verunreinigungen bzw. zur Entfernung von Chlor, insbesondere mittels Aktivkohle. Weiter ist denkbar, dass die Kartusche Substanzen zur Abgabe von Mineralstoffen und Spurenelementen an das Wasser enthält. Neben der Verwendung einer derartigen Kartusche zur Aufbereitung von Trinkwasser ist auch denkbar, die Kartusche zu verwenden, um demineralisiertes Wasser zur Verwendung im Haushalt, beispielsweise zum Bügeln, bereitzustellen. In diesem Falle wird vorzugsweise ein Mischbettfilter verwendet, also eine Kartusche, welche sowohl ein kationisches als auch anionisches Ionenaustauschermaterial enthält und welche zur Vollentsalzung des Wasser dient.

Aufgrund der Austauschbarkeit ist insbesondere denkbar, ein System mit zumindest zwei Kartuschentypen bereitzustellen, bei welchem ein Kartuschentyp der Trinkwasseraufbereitung dient und ein anderer Kartuschentyp als Mischbettfilter ausgebildet ist und zur Vollentsalzung dient.

Der Umwälzvorgang erfolgt vorzugsweise volumen- oder zeitgesteuert, d.h. nach einer Aktivierung fördert die Pumpe für eine vorgegebene Zeitspanne/ein vorgegebenes Wasservolumen und schaltet sich sodann selbständig ab.

Denkbar ist, die Zeitspanne variabel zu gestalten.

Zum einen ist denkbar, dass der Benutzer in Abhängigkeit vom Härtegrad des Wassers und vom gewünschten Grad der Enthärtung die Zeitspanne variieren kann. Hierfür kann z.B. eine geeignete Elektronik vorgesehen sein.

Zusätzlich oder in Kombination ist denkbar, die Zeitspanne abhängig von der Restlebensdauer der Kartusche zu verlängern. Aufgrund der fortschreitenden Entladung des Ionenaustauschermaterials nimmt die Wirksamkeit der Kartusche mit zunehmender Lebensdauer ab, d.h. der Grad der Enthärtung sinkt. Dies kann zumindest teilweise durch eine Verlängerung der Zeitspanne, in welcher die Pumpe läuft, in Abhängigkeit von der Restlebensdauer der Kartusche kompensiert werden.

Bei einer Weiterbildung der Erfindung umfasst die Vorrichtung zur Wasseraufbereitung über einen Sensor aktivierbare Antriebsmittel. Hierfür sind verschiedene Ausführungsvarianten vorgesehen.

Denkbar ist, als Sensor einen Feuchtigkeitssensor zu verwenden, beispielsweise in Form von Elektroden, welche sich insbesondere auch auf dem Gehäuse befinden können, in welchem ein Antriebsmotor angeordnet ist.

Über eine Leitfähigkeitsmessung wird erfasst, ob die Elektroden Kontakt mit Wasser haben. Die Elektroden können hierzu insbesondere auch an oder in einem Trichter angeordnet sein, von welchem aus das Wasser in einen Wassersammelbehälter gepumpt werden soll.

Durch das Eingießen von Wasser werden die Antriebsmittel aktiviert und können auch über die Elektroden wieder deaktiviert werden, nämlich wenn die Elektroden keinen Kontakt mehr mit Wasser haben.

Je nach Ausführungsvariante ist aber auch denkbar, die Elektroden lediglich zum Einschalten der Antriebsmittel zu verwenden, wobei das Ausschalten zeitbasiert erfolgt. Diese Ausführungsvariante eignet sich insbesondere für Anordnungen, bei denen die Elektroden derart nah platziert sind, dass nicht ausgeschlossen werden kann, dass nach Entleeren des Trichters weiterhin eine leitende Verbindung durch Restwasser vorhanden ist.

Bei einer weiteren Ausführungsform wird ein Neigungsschalter verwendet. Dieser kann insbesondere in dem hermetisch abgeschlossenen Gehäuse, in welchem sich der Antriebsmotor befindet, integriert sein.

Neigungsschalter sind preiswert. Über einen Neigungsschalter wird lediglich erfasst, ob die Vorrichtung von einem Benutzer in die Hand genommen und bewegt wird. Da dies in der Regel auch bei einem Einfüllen von Wasser zwingend notwendig ist, kann so der Neigungsschalter als billige automatische Variante verwendet werden, um die Antriebsmittel zu aktivieren. Das Abschalten erfolgt vorzugsweise wiederum zeitgesteuert.

Weiter ist auch denkbar, einen Kraftsensor zum Aktivieren der Antriebsmittel zu verwenden. Es ist insbesondere vorgesehen, einen Trichter in einen Wassersammelbehälter einzusetzen, wobei die Gewichtskraft des Trichters einen Kraftsensor aktiviert. Befindet sich nun Wasser im Trichter, so kann dies über den Kraftsensor erfasst werden und die Antriebsmittel können aktiviert werden. Das Abschalten kann sowohl über den Kraftsensor als auch über eine zeitbasierte Abschaltung erfolgen.

Eine weitere Möglichkeit ist die Verwendung eines Drucksensors, insbesondere auch eines Differenzdrucksensors, über welchen über die Druckdifferenz im Trichter sowie im Sammelwasserbehälter die Antriebsmittel gesteuert werden können.

Bei der ersten Ausführungsvariante der Erfindung, bei welcher die Vorrichtung in zwei Gehäuse unterteilt ist, sind Mittel zur Bedienung und zur Anzeige, wie beispielsweise eine Auswahleinrichtung und/oder ein Display vorzugsweise in dem zweiten Gehäuse angeordnet, in welchem stromführende Bauteile angeordnet sind.

Die Fördermittel sind vorzugsweise als ein Laufrad, insbesondere als ein Pumpenrad ausgebildet, welches zumindest abschnittsweise ferromagnetisch oder magnetisch ausgebildet ist, um durch eine Wand hindurch angetrieben werden zu können. Beispielsweise ist es denkbar, auf einem Pumpenrad aus Kunststoff zumindest einen deaxial angeordneten Magneten anzubringen. Dieser kann über ein korrespondierendes, sich drehendes Bauteil auf einer der Wand gegenüber liegenden Seite dazu dienen, das Pumpenrad anzutreiben.

Denkbar sind aber auch andere Pumpprinzipien, etwa eine Membranpumpe, deren Membran magnetisch durch eine Wand des hindurch betätigbar ist.

Bei einer bevorzugten Ausführungsform der Erfindung umfasst die Vorrichtung eine Anzeigeeinrichtung, welche ein notwendiges Wechseln einer Kartusche mit dem Ionenaustauschermaterial signalisiert.

Neben einem optischen Signalisieren, dass die Kartusche ihre Maximallebensdauer erreicht hat, ist es auch denkbar, die Vorrichtung derart auszugestalten, dass die Pumpe nicht mehr aktivierbar ist, wenn die Kartusche ihre maximale Lebenszeit erreicht hat.

Es ist dann denkbar, dass der Benutzer eine neue Kartusche einsetzt und die Vorrichtung zur Wasseraufbereitung durch den Benutzer zurückgesetzt wird, beispielsweise durch Betätigen eines Rücksetzschalters.

Denkbar ist aber auch eine automatische Erkennung des Einsetzens einer neuen Kartusche.

Die maximale Lebensdauer der Kartusche kann über ein Elektronikmodul berechnet werden.

Die Berechnung der Lebensdauer der Kartusche kann auf Basis eines oder mehrerer nachstehend genannter Parameter erfolgen:
Gesamtzeit, über welche die Pumpe aktiviert ist,
Zeit seit erstmaligem Verwenden der Kartusche, Leitfähigkeitsänderung des behandelnden Wassers, und zwar entweder über eine vorgegebene Zeitspanne bestimmt oder bezogen auf einen vorgegebenen Schwellwert,
Härtegrad des Wassers, und zwar entweder auf Basis eines vom Benutzer eingegebenen Wertes oder geschätzt auf Basis der Leitfähigkeit des Wassers.

Im einfachsten Fall wird die Zeitspanne, über die die Pumpe insgesamt aktiviert ist, herangezogen, da diese in hohem Maße mit der durch die Kartusche geleiteten Wassermenge korreliert.

Die Vorrichtung kann des Weiteren einen Ultrafilter umfassen, welcher in Strömungsrichtung des Wassers nach der Kartusche mit dem Ionenaustauschermaterial angeordnet ist.

Neben einer Enthärtung des Wassers können so Krankheitskeime entfernt werden und die Vorrichtung kann insbesondere auch verwendet werden, um aus Wasser, welches aufgrund der Keimbelastung nicht zum Trinken geeignet ist, Trinkwasser zu erzeugen.

### Beschreibung der Zeichnungen

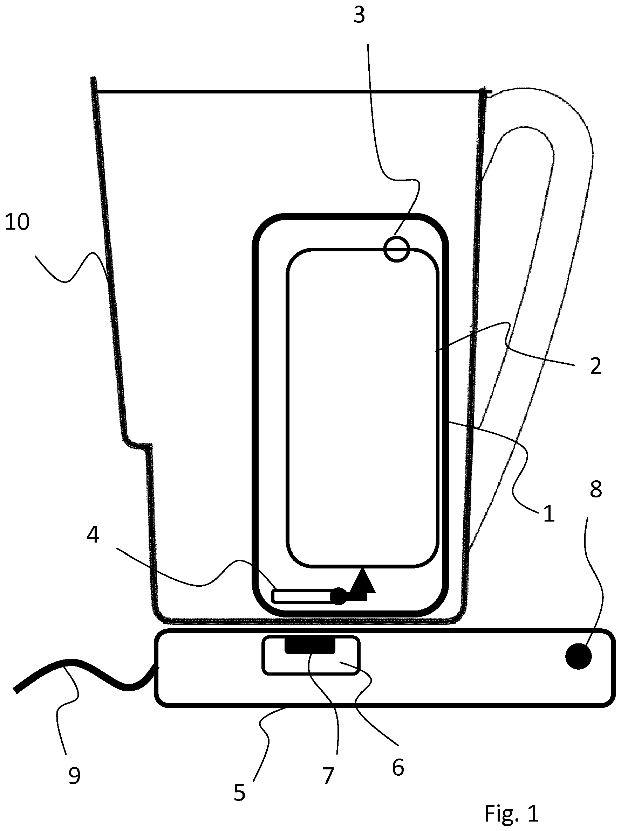

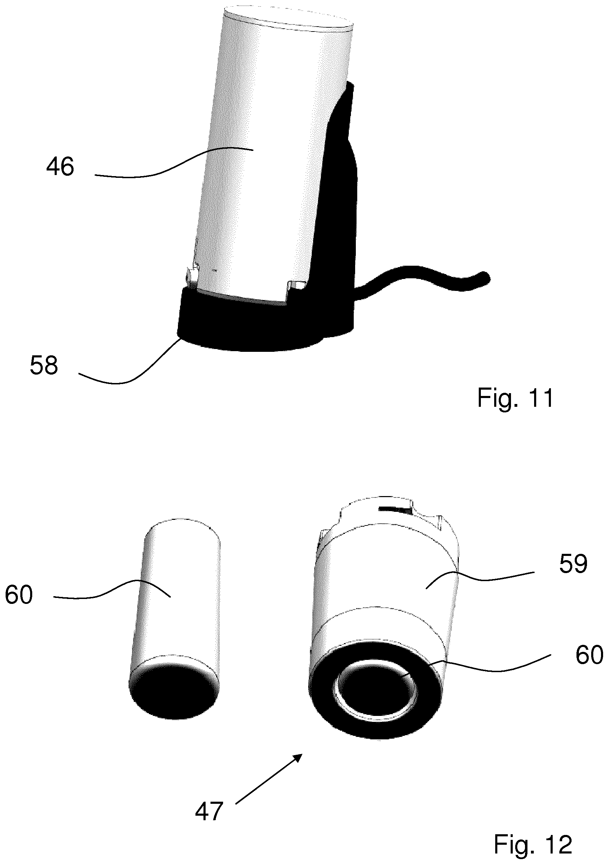

Der Gegenstand der Erfindung soll im Folgenden bezugnehmend auf die Zeichnungen Fig. 1 bis Fig. 22 näher erläutert werden.

Fig. 1 zeigt in einer schematischen Darstellung das Grundprinzip der Erfindung. Dabei ist die Vorrichtung zur Wasseraufbereitung in ein erstes Gehäuse 1 und ein zweites Gehäuse 5 unterteilt.

In diesem Beispiel dient die Vorrichtung der Wasseraufbereitung des in einer Kanne 10 aufbewahrten Trinkwassers.

In das erste Gehäuse 1 ist eine Kartusche 3 mit einem Ionenaustauschermaterial (nicht dargestellt) eingesetzt. Das Gehäuse 5 umfasst einen Auslauf 2.

Über Fördermittel 4, welche als Pumpenrad ausgebildet sind, wird Wasser angesaugt. Hierzu befindet sich auf der gegenüberliegenden Seite ein Einlauf (nicht dargestellt).

Das Wasser wird sodann durch die Kartusche 3 gepumpt und verlässt über den Auslauf 2 das Gehäuse.

Die Kanne 10 ist in diesem Ausführungsbeispiel auf das zweite Gehäuse aufgesetzt. Um einen sicheren Halt zu gewährleisten, können Kanne 10 und zweites Gehäuse 5 korrespondierende Formschlusselemente (nicht dargestellt) aufweisen.

In dem zweiten Gehäuse befindet sich ein Motor 6, welcher eine Magnetscheibe 7 antreibt.

Die Magnetscheibe 7 liegt den als Pumpenrad ausgebildeten Fördermitteln 4 gegenüber. Das Pumpenrad bzw. die Fördermittel 4 weisen zumindest einen magnetischen oder ferromagnetischen Abschnitt auf, so dass die Fördermittel 4 über die Magnetscheibe 7 angetrieben werden können.

Bei dieser Ausführungsform bildet nunmehr der Boden der Kanne 10 die Wand, durch welche die Fördermittel 4 hindurch angetrieben werden.

Das erste Gehäuse 1 weist keine stromführenden Bauteile auf.

Das zweite Gehäuse ist über ein Netzkabel 9 mit dem Stromanschluss verbunden. Hierdurch wird die Stromversorgung des Motors 6 sichergestellt.

Denkbar sind aber auch die Verwendung von Akkus sowie die Verwendung eines netzseitigen Transformators und die Versorgung des zweiten Gehäuses 5 mit Niederspannung.

Das zweite Gehäuse 5 weist des Weiteren zumindest einen Schalter 8 zur Aktivierung des Motors 6 und damit der Fördermittel 4 auf.

Nach Aktivierung kann beispielsweise der Motor 6 zeitgesteuert gestoppt werden.

Dies kann über den Schalter 8 erfolgen. Weiter ist denkbar, die Vorrichtung automatisch zu aktivieren, etwa indem die Kanne auf das zweite Gehäuse 5 gesetzt wird. Dies kann beispielsweise über einen Reed-Schalter im zweiten Gehäuse 5 (nicht dargestellt) und einen korrespondierenden an der Kanne 10 oder dem ersten Gehäuse 1 angebrachten Magneten erfolgen.

Das zweite Gehäuse 5 kann des Weiteren noch eine Anzeige umfassen, welche insbesondere einen notwendigen Austausch des Ionenaustauschermaterials signalisiert (nicht dargestellt).

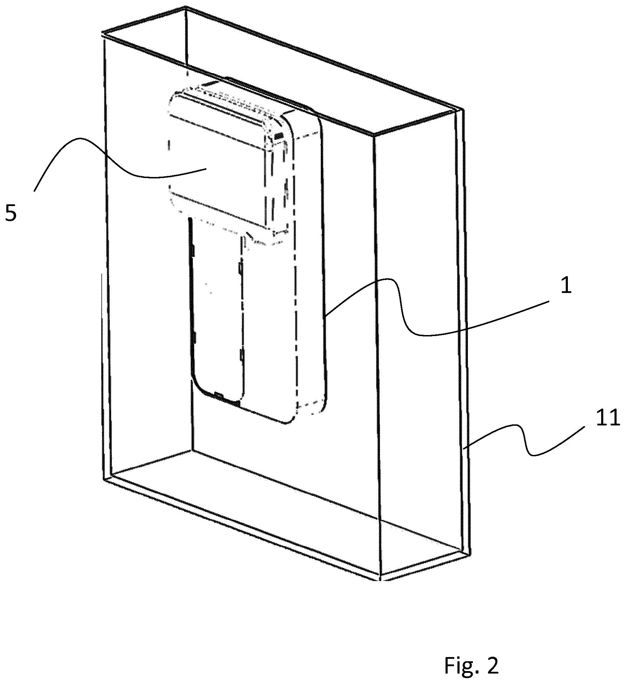

Fig. 2 zeigt eine schematische Darstellung der Verwendung einer nicht erfindungsgemäßen Vorrichtung zur Wasseraufbereitung für den Tank 11 einer Maschine zur Zubereitung von Heißgetränken, wie beispielsweise eines Kaffeevollautomaten.

Hier ist das erste Gehäuse 1 in den Tank 11 eingetaucht.

Erstes Gehäuse 1 und zweites Gehäuse 5 weisen Magnete auf (nicht dargestellt), über welche sich die Gehäuse anziehen.

In dem zweiten Gehäuse 5 kann sich wiederum ein Elektromotor befinden, über welchen Fördermittel in dem ersten Gehäuse 1 angetrieben werden.

Aufgrund der Anziehung der beiden Gehäuse dient das zweite Gehäuse 5 gleichzeitig zur randseitigen Fixierung des ersten Gehäuse 1 am Tank.

Auch hier befinden sich vorzugsweise am zweiten Gehäuse Mittel zur Bedienung, wie beispielsweise ein Schalter und/oder Anzeigemittel (nicht dargestellt).

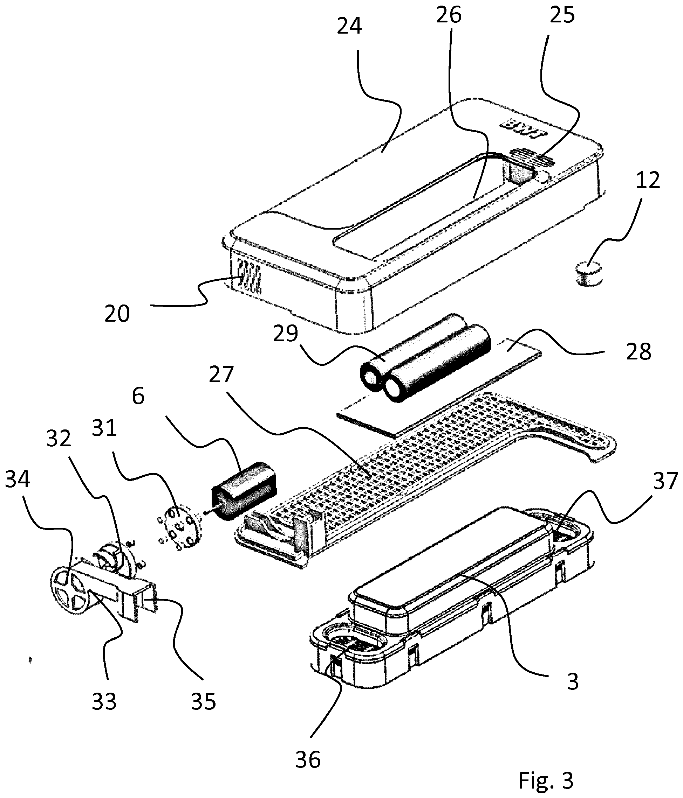

Fig. 3 bis Fig. 6 zeigt in einer Explosionsdarstellung die wesentlichen Komponenten einer nicht erfindungsgemäßen Vorrichtung zur Wasseraufbereitung, bei welcher der Motor zum Antrieb der Pumpe innerhalb eines zumindest teilweise hermetisch verschlossenen Gehäuses angeordnet ist, welches ins Wasser getaucht werden kann.

Zu erkennen ist ein Gehäuseoberteil 24 mit einem seitlich angeordneten Einlauf 20 und einem Auslauf 25, welcher auf der Oberseite des Gehäuseoberteils 24 angeordnet ist. Das Gehäuseoberteil 24 weist eine Aussparung 26 auf, in welche in zusammengebautem Zustand das Gehäuseoberteil der Kartusche 3 ragt.

Das Gehäuseoberteil 24 wird mit einem Gehäuseunterteil 27 verbunden.

Zwischen Gehäuseoberteil 24 und Gehäuseunterteil 27 wird ein hermetisch verschlossener Gehäuseabschnitt gebildet.

In diesem Gehäuseabschnitt sitzt eine Platine 28.

Auf der Platine 28 sitzen die Akkus 29.

Die Platine 28 bildet ein Elektronikmodul, welches den Elektromotor 6 ansteuert.

Dieser ist ebenfalls im hermetisch verschlossenen Bereich des Gehäuses angeordnet.

Über den Elektromotor 6 wird ein Rad 31 bewegt, welches zumindest einen Magneten aufweist.

Auch das Rad 31 sitzt im hermetisch verschlossenen Gehäuseabschnitt.

Das Wasser wird mittels eines Laufrades 32, welches in diesem Ausführungsbeispiel als Turbinenrad ausgebildet ist, gefördert. Das Laufrad weist ebenfalls zumindest einen Magneten auf oder ist zumindest abschnittsweise ferromagnetisch ausgebildet. In diesem Fall weisen sowohl Laufrad 32 als auch das Rad 31 mehrere über den Umfang verteilte Magnete auf. Aufgrund der magnetischen Kräfte dreht sich auch das Laufrad 31, wenn das Rad 31 vom Elektromotor angetrieben wird.

Zum Pumpen von Wasser sitzt das Laufrad 32 in einem Laufradgehäuse 33, welches einen Einlass 34 und einen Auslauf 25 aufweist. Über den Einlass 34 wird durch den Einlauf 20 des Gehäuseoberteils Wasser angesaugt und seitlich durch den Auslass in den Einlauf 36 der Kartusche 3 gefördert.

Dieses Wasser passiert sodann die Kartusche 3, wird aufbereitet und tritt über den Auslauf 37 aus der Kartusche aus, worauf es über den Auslauf 25 des Gehäuses austreten kann.

Weiter zu erkennen ist ein Magnet 12, welcher der Befestigung des Gehäuses mittels eines korrespondierenden Halters dient.

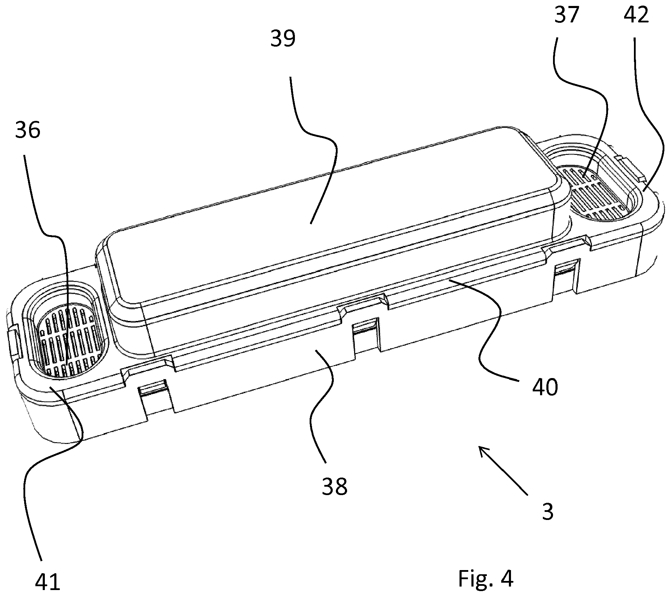

Fig. 4 zeigt in einer perspektivischen Darstellung die Kartusche 3, in welcher das Ionenaustauschermaterial (nicht dargestellt) angeordnet ist.

Die Kartusche 3 umfasst ein Gehäuseunterteil 38 sowie ein Gehäuseoberteil 39, wobei in diesem Fall nicht separate Bauteile verstanden werden, sondern die geometrische Ausgestaltung der Kartusche 3.

Sowohl Gehäuseoberteil 39 als auch Gehäuseunterteil 38 sind im Wesentlichen quaderförmig ausgebildet.

Das Gehäuseunterteil 38 ist in diesem Ausführungsbeispiel in der Draufsicht gesehen größer als das Gehäuseoberteil 39 und weist, in Haupterstreckungsrichtung gesehen, zwei Fortsätze 41, 42 auf.

Die Fortsätze ragen mindestens 1 cm über das Gehäuseoberteil 39.

In den Fortsätzen befindet sich der Einlauf 36 sowie der Auslauf 37 der Kartusche, wobei die Kartusche 3 in diesem Ausführungsbeispiel derart symmetrisch ausgebildet ist, dass diese auch um 180° verdreht eingesetzt werden kann, wodurch Einlauf und Auslauf vertauscht sind. Die Strömungsrichtung ist bei einer Kartusche mit einem Ionenaustauscherharz aber egal.

Einlauf 36 und Auslauf 37 haben einen offenen Querschnitt von vorzugsweise mindestens 0,5 cm2.

Einlauf 36 und Auslauf 37 sind auf der Oberseite des Gehäuseunterteils 38 angeordnet und zeigen mithin in Richtung des Gehäuseoberteils 39.

Ein- und Auslauf 36, 37 bilden eine Vertiefung und sind mit einem Gitter versehen, welches dem Rückhalten des Ionenaustauscherharzes dient.

Die hier dargestellte Kartuschenbauform hat den Vorteil, dass das Gehäuseoberteil 39 weiteres Volumen bereitstellt, in dem Ionenaustauschermaterial vorhanden sein kann.

Dadurch, dass Ein- und Auslauf innerhalb der Fortsätze angeordnet sind, wird ermöglicht, dass diese im Wesentlichen mittig im Gehäuse (2 in Fig. 2) angeordnet sein können, so dass in diesem Bereich Zu- und Ablauf in kompakter Bauform angeordnet sein können.

Das Gehäuseunterteil 38 ist in dieser Ausführungsform auch an der Längsseite des Gehäuseoberteils 39 größer ausgebildet, so dass auch längsseitig das Gehäuseunterteil 38 einen Steg 40 bildet.

Dieser kann beispielsweise als Anschlag beim Einsetzen der Kartusche dienen und stabilisiert zudem das Gehäuse.

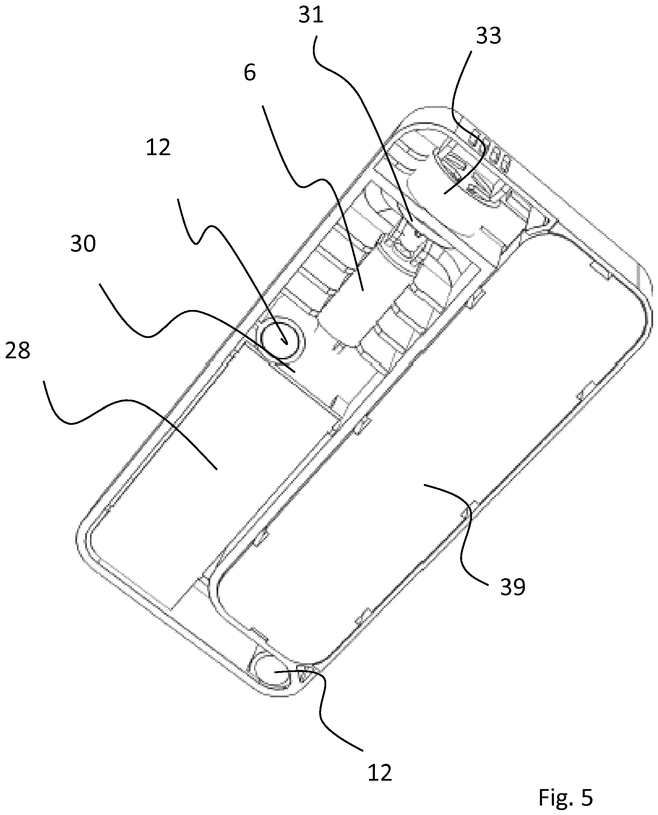

Fig. 5 zeigt eine perspektivische Ansicht der in Fig. 5 dargestellten Vorrichtung zur Wasseraufbereitung, wobei in dieser Ansicht die Komponenten zusammengebaut sind, das Gehäuseunterteil allerdings ausgeblendet ist.

Zu erkennen ist die Oberseite des Gehäuseoberteils 39, welche durch die Aussparung des Gehäuses zu sehen ist.

Weiter zu erkennen sind zwei Magnete 12, welche der Befestigung des Gehäuses in einem Tank oder einer Kanne dienen.

In einem hermetisch verschlossenen Gehäuseabschnitt 30, welcher durch das Anbringen des Gehäuseunterteils gebildet wird, sind u.a. die Platine und der Elektromotor 6 sowie das Rad 31 angeordnet.

Das Laufradgehäuse 33 befindet sich dagegen in einem nicht hermetisch verschlossenen Abschnitt.

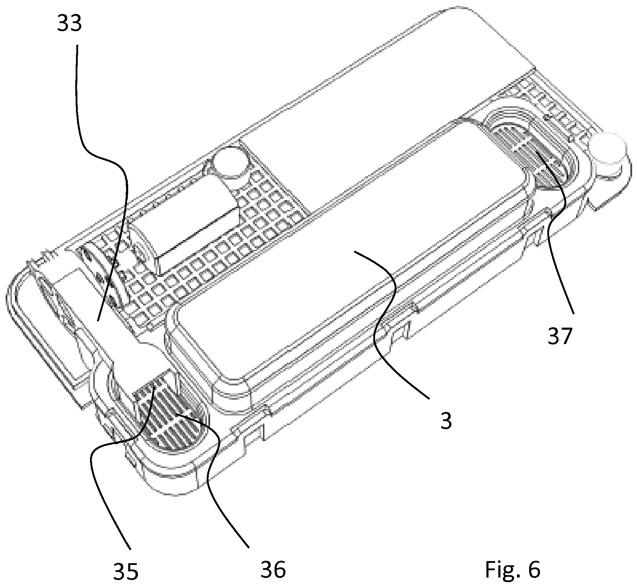

Fig. 6 zeigt eine weitere perspektivische Ansicht, bei welcher nunmehr das Gehäuseoberteil ausgeblendet ist.

Zu sehen ist insbesondere das Laufradgehäuse 33, dessen Auslass 35 über dem Einlass 36 der Kartusche 3 angeordnet ist.

So kann auf einfache Weise das Wasser zum Einlauf 36 der Kartusche 3 gefördert werden. Es sind keine aufwendigen Dichtungen notwendig, randseitig zum Einlauf 36 vorhandene Leckagen führen lediglich zu einer etwas verschlechterten Effizienz der Pumpe.

Über den Auslauf 37 tritt das Wasser aus der Kartusche aus. Denkbar ist die Bereitstellung von verschiedenen Kartuschentypen zur Enthärtung von Trinkwasser sowie zum Vollentsalzen von Wasser für Haushaltszwecke.

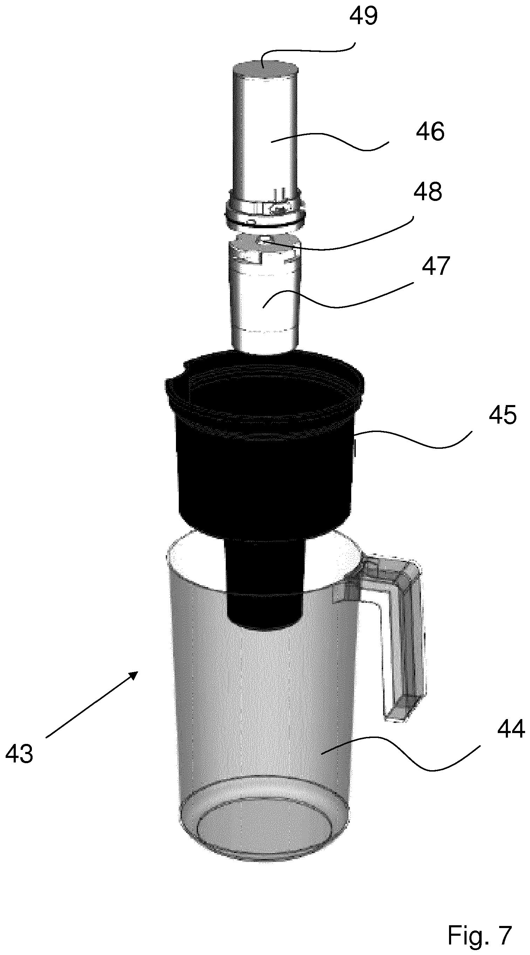

Fig. 7 zeigt eine weitere Vorrichtung in einer perspektivischen Ansicht.

Die hier dargestellte Vorrichtung zur Wasseraufbereitung 43 ähnelt vom Aussehen her einem herkömmlichen schwerkraftbetriebenen Wasserhaushaltsfilter.

Die Vorrichtung zur Wasseraufbereitung 43 umfasst einen Wassersammelraum 44, welcher als Kanne ausgebildet ist.

In den Wassersammelraum 44 wird ein Trichter 45 eingesetzt. In den Trichter 45 eingesetzt wird eine Kartusche 47 mit einem Ionenaustauschermaterial, wie es auch bei schwerkraftbetriebenen Vorrichtungen der Fall ist.

Im Unterschied zu einer schwerkraftbetriebenen Vorrichtung kann auf die Kartusche 47 das Gehäuse 46 aufgesetzt werden. Das Gehäuse 46 umfasst einen Antriebsmotor, welcher ein Laufrad antreibt (nicht zu sehen), über das über den Einlauf 48 der Kartusche 47 Wasser durch die Kartusche 47 gedrückt wird. Das Wasser tritt unten am Trichter 45 aus und läuft in den Wassersammelbehälter 44.

Das Gehäuse 46 ragt in diesem Ausführungsbeispiel bis an den oberen Rand des Trichters 45. Es versteht sich, dass der Trichter 45 noch mit einem Deckel (nicht dargestellt) verschlossen werden kann.

Auf der Oberseite 49 des Gehäuses 46 kann eine Wechselanzeige angeordnet sein, welche einen notwendigen Austausch der Kartusche 47 signalisiert (nicht dargestellt). Diese Wechselanzeige kann mit der Pumpvorrichtung, welche Laufrad und Antriebsmotor umfasst, gekoppelt sein.

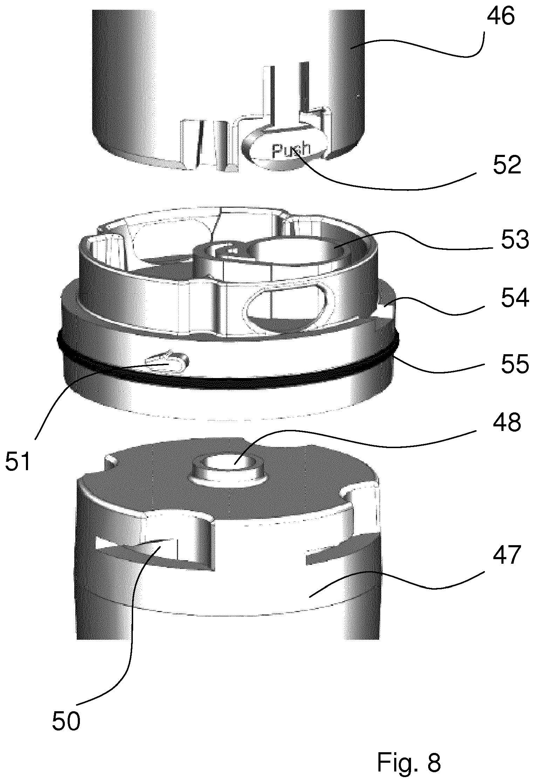

Fig. 8 zeigt eine Detaildarstellung der Fig. 7, wobei von dem Gehäuse 46, welches einen hermetisch verschlossenen Abschnitt mit den Antriebsmitteln umfasst, das Unterteil 54 des Gehäuses abgenommen ist.

Das Gehäuse 46 umfasst Schnapplaschen 52, mittels welcher es mit dem Unterteil 54 verrastet werden kann.

Im wasserführenden Unterteil befindet sich das Laufradgehäuse 53.

Das Laufrad (nicht dargestellt) dreht sich in dem Laufradgehäuse 53 und fördert durch das Unterteil 54 Wasser zum Einlauf 48 der Kartusche 47.

Das Unterteil 54 ist wiederum mittels eines Bajonettverschlusses, der aus Stegen 51 und Nuten 50 gebildet wird, mit der Kartusche 47 verbunden.

Über eine einfache Drehbewegung kann die Kartusche 47 von dem Gehäuse 46 bzw. dem Unterteil 54 getrennt werden.

Das abnehmbare Unterteil 54 hat den Vorteil, dass dieses leichter gereinigt werden kann, beispielsweise in einer Spülmaschine.

Das Unterteil 54 umfasst des Weiteren eine umlaufende Dichtung 55, welche in diesem Ausführungsbeispiel als O-Ring ausgebildet ist, um dichtend im Trichter (54 in Fig. 7) eingesetzt zu sein.

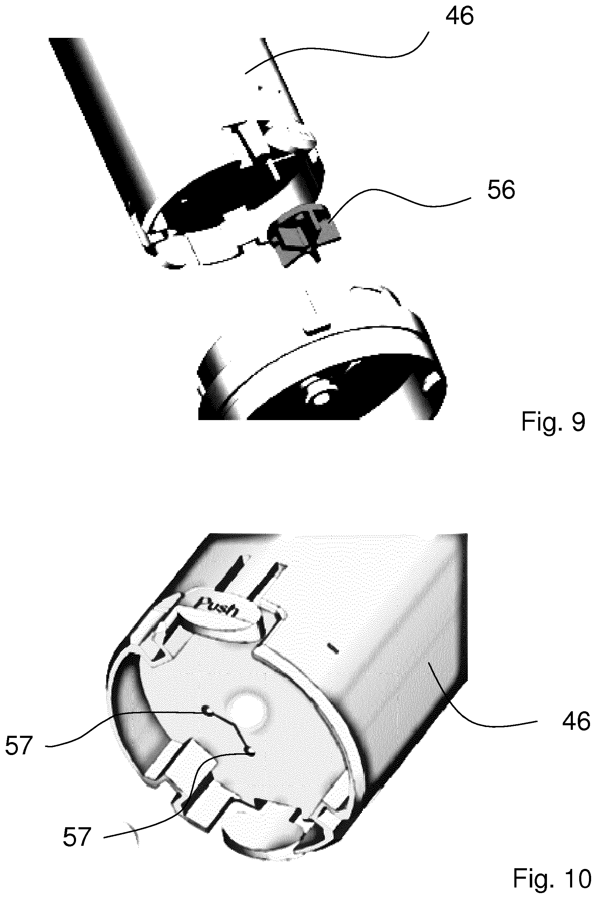

Fig. 9 zeigt eine weitere perspektivische Detaildarstellung, in welcher nunmehr das Laufrad 56 gut zu erkennen ist.

Das Laufrad 56 kann vom oberen Teil des Gehäuses 46 abgenommen werden, um dieses zu reinigen.

Das Laufrad 56 wird über in dem Gehäuse 46 integrierte magnetische Mittel (nicht dargestellt) angetrieben, vorzugsweise nachdem in Fig. 3 gezeigten Prinzip. Fig. 10 zeigt eine weitere perspektivische Detaildarstellung des oberen Teils des Gehäuses 46. Dieser obere Teil ist hermetisch verschlossen. Auf der Unterseite weist das Oberteil zwei Elektroden 57 auf, welche als Sensor dienen, um zu erfassen, dass das Gehäuse 46 in Wasser eingetaucht ist.

Wird nun Wasser in den Trichter gegossen, stehen die Elektroden 57 im Wasser und aktivieren die in dem oberen Gehäuseteil vorhandenen Antriebsmittel.

Fig. 9 zeigt beispielhaft, wie die in dem Gehäuse 46 angeordneten Antriebsmittel auf einer Ladestation 58 aufgeladen werden. Das Aufladen erfolgt vorzugsweise induktiv. Die Akkus zum Antrieb eines Antriebsmotors sind in dem hermetisch verschlossenen Gehäuse 46 integriert.

Fig. 12 zeigt in einer perspektivischen Ansicht die Kartusche 47, welche in diesem Ausführungsbeispiel eine ersten Filterstufe 59 umfasst.
In der ersten Filterstufe 59 ist das
Ionenaustauschermaterial angeordnet.
In diesem Ausführungsbeispiel kann in die erste Filterstufe 59 eine zweite Filterstufe 60 eingesetzt werden.

Die erste Filterstufe 59 umfasst hierfür eine Ausnehmung. Als zweite Filterstufe 60 kann insbesondere ein Ultrafilter verwendet werden.

Die zweite Filterstufe 60 kann entnommen werden. Dies ist insbesondere von Vorteil, da ein Ultrafilter in der Regel eine längere Lebensdauer hat als ein Ionenaustauscher.

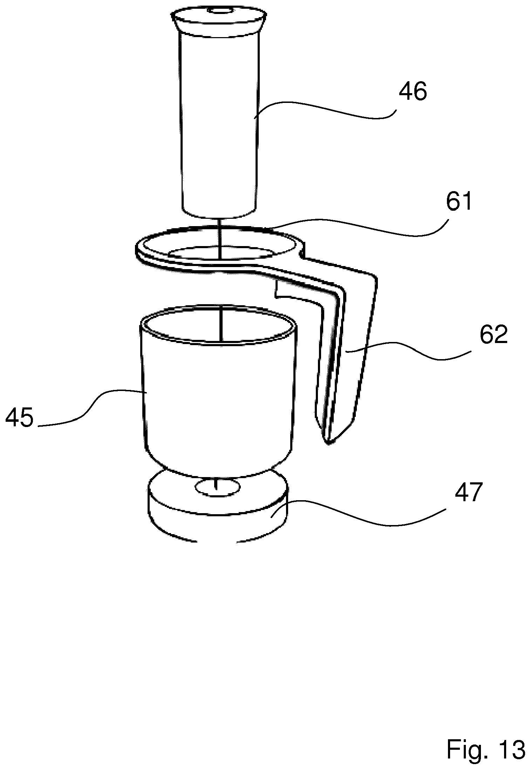

Fig. 13 zeigt eine weitere Vorrichtung, bei welcher ein hermetisch verschlossenes Gehäuse 46 mit dem Trichter 45 und der Kartusche 46 verbunden wird.

Diese Teile können insbesondere miteinander verschraubt werden.

Eine Abdeckung 61, welche vorzugsweise ebenfalls am Trichter 45 befestigt werden kann, dient als Teil des Trichters und erleichtert das Eingießen.

An der Abdeckung 61 ist ein oberes Griffteil 62 angebracht.

Dieses kann in das untere Griffteil einer Kanne (nicht dargestellt) eingesetzt werden, wobei die Kanne oben von der Abdeckung 61 verschlossen wird.

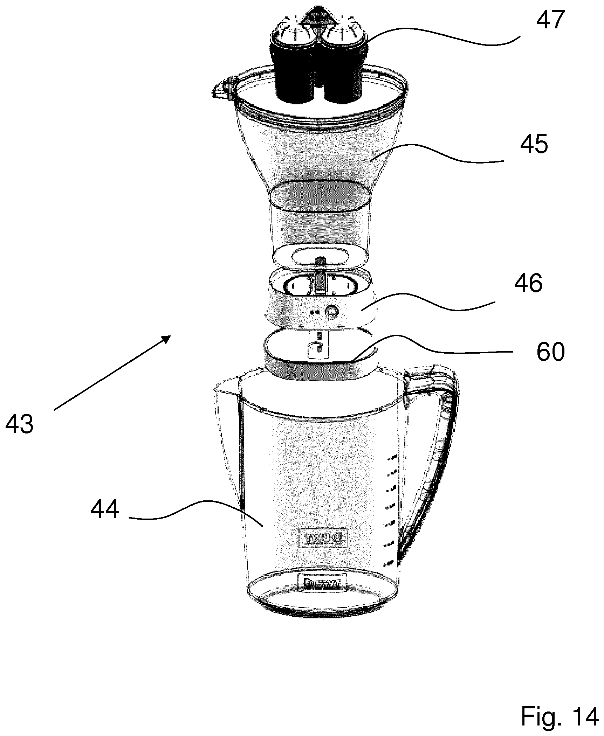

Bezugnehmend auf Fig. 14 bis 18 soll eine weitere Ausführungsform der Erfindung erläutert werden.

Fig. 14 zeigt eine perspektivische Ansicht einer Vorrichtung zur Wasseraufbereitung 43, welche ebenfalls einem schwerkraftbetriebenen Wasserhaushaltsfilter ähnelt.

Die Vorrichtung zur Wasseraufbereitung 43 umfasst einen als Kanne ausgebildeten Wassersammelbehälter 44.

In den Wassersammelbehälter 44 wird ein Trichter 45 eingesetzt, welcher eine Kartusche 47 mit einem Ionenaustauschermaterial aufnimmt.

Unterhalb des Trichters 45 ist ein zumindest abschnittsweise hermetisch verschlossenes Gehäuse 46 angeordnet, welches eine Pumpe umfasst.

Ein Einlauf des Gehäuses 46 wird mit der Kartusche 47 verbunden.

Über eine Pumpe im Gehäuse 46 wird Wasser in den Wassersammelbehälter 44 gefördert.

Unterhalb des Gehäuses 46 befindet sich eine zweite Filterstufe 60, etwa in Form eines Ultrafilters.

Mithin können bei dieser Ausführungsform der Erfindung Filterstufen sowohl vor als auch nach dem Gehäuse 46 mit der Pumpe angeordnet sein.

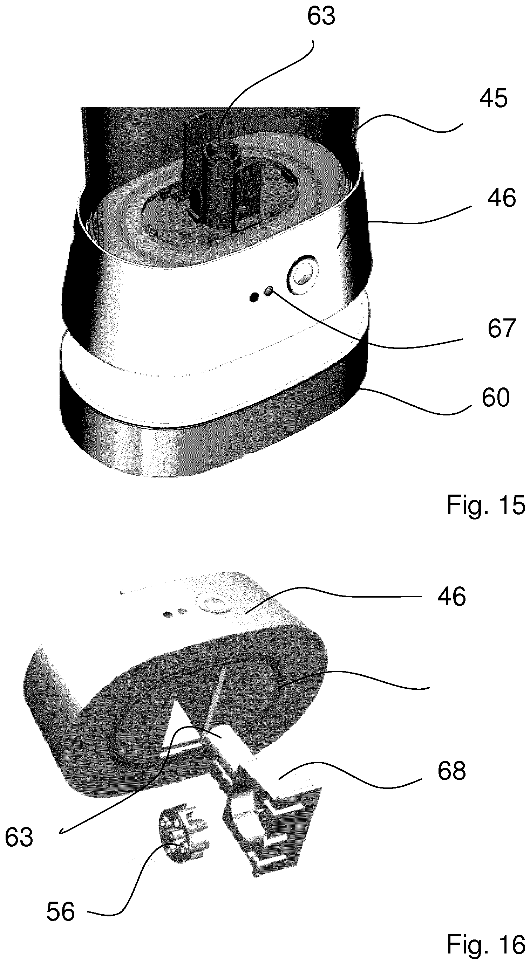

Fig. 15 zeigt eine Detaildarstellung des Gehäuses 46, welches auf den Trichter 45 aufgeschnappt wird.

Ein Einlauf 63 des Gehäuses 46, welcher zur Pumpe führt, wird dichtend mit der Kartusche verbunden.

Das Gehäuse 46 weist ferner eine Anzeige 67 auf, die ein Arbeiten der Pumpe und/oder den Ladezustand eines Akkus signalisiert.

Unterhalb des Gehäuses 46 ist die zweite Filterstufe 60 zu erkennen.

Fig. 16 zeigt eine weitere perspektivische Darstellung des Gehäuses 46.

Der hierzu erkennende obere Gehäuseabschnitt 46 ist hermetisch verschlossen und umfasst die Antriebsmittel für das Laufrad 56.

Das Laufrad 56 ist abnehmbar in ein Laufradgehäuse 68 eingesetzt, welches den Einlauf 63 umfasst.

Das Laufradgehäuse 68 wird in das obere Teil des Gehäuses 46 eingesetzt.

Zu erkennen ist ferner eine untere Dichtung 69, welche der dichtenden Verbindung mit der zweiten Filterstufe dient.

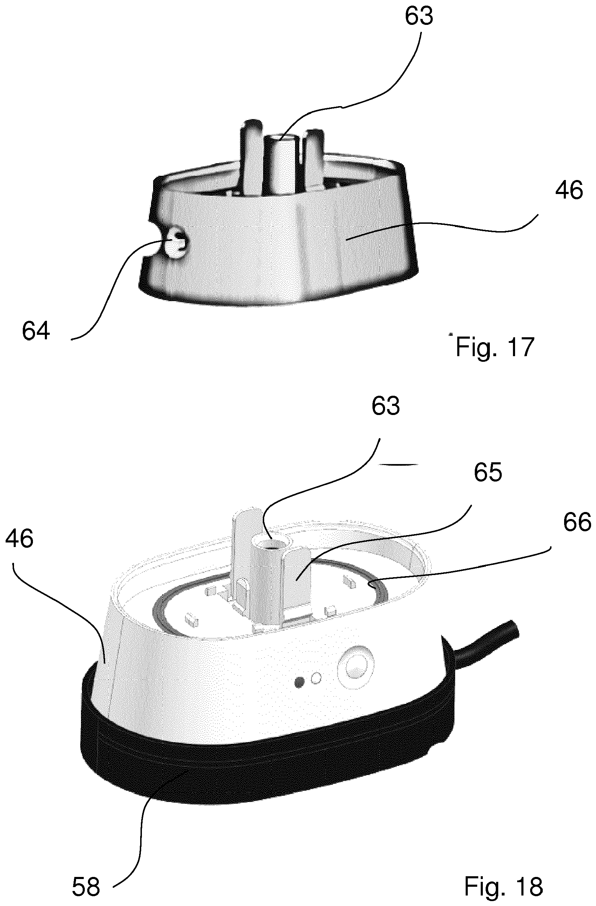

Fig. 17 zeigt eine weitere perspektivische Darstellung des Gehäuses 46.

Zu erkennen ist der Einlauf 63.

Weiter ist zu erkennen eine seitliche Öffnung 64, welche dem Anschluss eines hier nicht dargestellten Differenzdrucksensors bzw. Differenzdruckschalters dient.

Über die Öffnung 64 besteht eine Verbindung des Differenzdrucksensors mit dem Wassersammelbehälter.

Anhand der Druckdifferenz von Trichter von Wassersammelraum kann auf das Vorhandensein von Wasser im Trichter geschlossen werden.

Fig. 18 zeigt eine weitere perspektivische Ausführungsform, bei der nunmehr das Gehäuse 46 auf eine Ladestation 58 aufgesetzt ist.

Zu erkennen ist die Dichtung 66, welche der dichtenden Anlage am Trichter dient, in welchem das Gehäuse 46 mittels der Rastmittel 65 eingerastet wird.

Weiter zu erkennen ist der röhrchenförmige Einlauf 63, in welchen ein röhrenförmiger Auslauf der Kartusche (nicht dargestellt) eingesteckt wird.

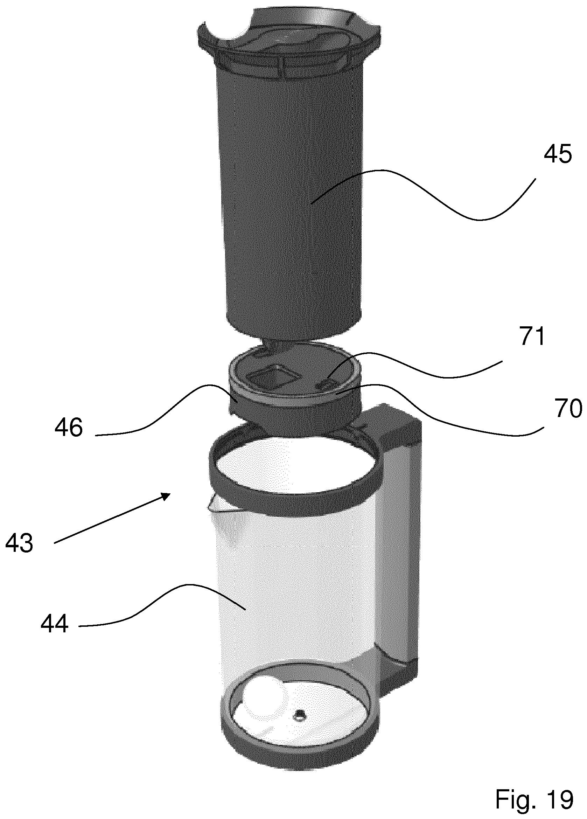

Bezugnehmend auf Fig. 19 bis Fig. 22 soll eine weitere Vorrichtung zur Wasseraufbereitung 43 näher erläutert werden.

Auch diese Vorrichtung zur Wasseraufbereitung 43 umfasst einen Wassersammelbehälter 44, welcher als Kanne ausgebildet ist.

Ein Trichter 45, welcher im Wesentlichen zylindrisch ausgebildet ist, dient der Aufnahme einer Kartusche (nicht dargestellt) mit einem Ionenaustauschermaterial.

Unten an den Trichter ankoppelbar ist wiederum ein Gehäuse 46, in welchem wiederum hermetisch verschlossen die Antriebsmittel (Motor, Akku etc.) für ein Laufrad angeordnet sind, welches magnetisch betätigt wird.

Das Gehäuse 46 umfasst eine ringförmige Anzeige 70, welche den Ladezustand signalisiert. Die Oberseite des Gehäuses 46 umfasst Eingriffelemente 71, um mit dem Trichter 45 verbunden zu werden.

Dies kann beispielsweise über Rastmittel, ein Bajonett- oder Schraubverschluss erfolgen.

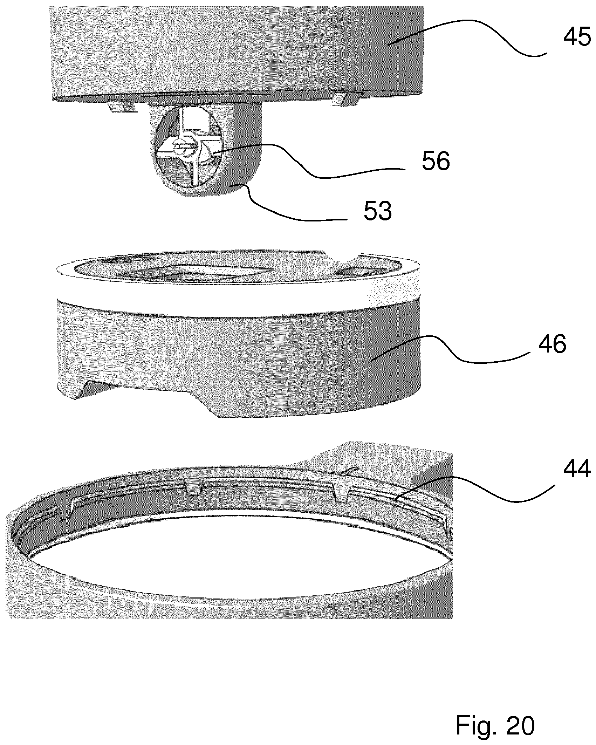

Fig. 20 zeigt eine perspektivische Detaildarstellung.

Zu erkennen ist, dass das Laufradgehäuse 53, in welchem das Laufrad 46 abnehmbar angeordnet ist, Teil des Trichters 45 ist.

Der Trichter 45 wird zusammen mit dem Laufradgehäuse 53 und dem Laufrad 56 in das hermetisch verschlossene Gehäuse 46 eingesetzt. Es ist nach dem Impeller-Prinzip wirksam und fördert Wasser aus dem Trichter 45 in den Wassersammelbehälter 44.

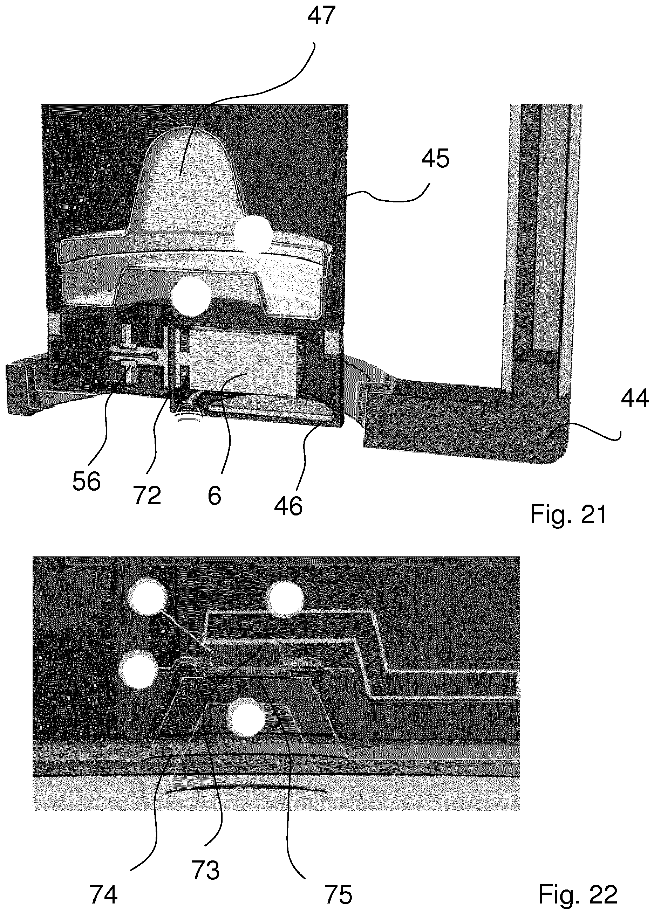

Fig. 21 zeigt eine Detaildarstellung in einer Schnittansicht.

Zu erkennen ist das hermetisch abgeschlossene Gehäuse 46, welches den Motor 6 umfasst, der durch die Wand 72 über magnetische Mittel das Laufrad 56 bewegt.

Die Kartusche 47 ist dichtend in den Trichter 45 eingesetzt.

Mittels des Laufrads wird durch die Kartusche 47 hindurch Wasser in den Wassersammelbehälter 44 gefördert.

Fig. 22 zeigt eine weitere Detaildarstellung.

Zu erkennen ist, dass sich am Boden des Wassersammelbehälters ein Vorsprung 45 befindet.

Am Gehäuse des Pumpmechanismus (46 in Fig. 21) ist ein Kraftsensor 73 angeordnet, welcher mittels einer Membran 74 gehalten wird.

Der Trichter ist axial beweglich, so dass die Gewichtskraft des Trichters vom Kraftsensor 73 erfasst wird.

Zumindest längerfristige Änderungen der gemessenen Kraft können als Pegeländerungen interpretiert werden und die Pumpe in Gang setzen.

Denkbar ist, den Kraftsensor 73 zugleich auch als Schalter für den Benutzer auszubilden, etwa beispielsweise als Reset-Schalter für eine Zählvorrichtung.

Ein derartiger Reset kann beispielsweise durch längeres Drücken des Trichters eingeleitet werden.

Über kürzeres Drücken kann beispielsweise die Pumpe an- und ausgeschaltet werden.

### Bezugszeichenliste:

- 1: erstes Gehäuse
- 2: Auslauf
- 3: Kartusche
- 4: Fördermittel
- 5: zweites Gehäuse
- 6: Motor
- 7: Magnetscheibe
- 8: Schalter
- 9: Netzkabel
- 10: Kanne
- 11: Tank
- 12: Magnet
- 24: Gehäuseoberteil
- 25: Auslauf
- 26: Aussparung
- 27: Gehäuseunterteil
- 28: Platine
- 29: Akku
- 30: hermetisch verschlossener Gehäuseabschnitt
- 31: Rad
- 32: Laufrad
- 33: Laufradgehäuse
- 34: Einlass
- 35: Auslass
- 36: Einlauf
- 37: Auslauf
- 38: Gehäuseunterteil
- 39: Gehäuseoberteil
- 40: Rand
- 41: Fortsatz
- 42: Fortsatz
- 43: Vorrichtung zur Wasseraufbereitung
- 44: Wassersammelbehälter
- 45: Trichter
- 46: Gehäuse
- 47: Kartusche
- 48: Einlauf
- 49: Oberseite
- 50: Nut
- 51: Steg
- 52: Schnapplasche
- 53: Laufradgehäuse
- 54: Unterteil
- 55: Dichtung
- 56: Laufrad
- 57: Elektrode
- 58: Ladestation
- 59: erste Filterstufe
- 60: zweite Filterstufe
- 61: Abdeckung
- 62: Griff
- 63: Einlauf
- 64: Öffnung
- 65: Rastmittel
- 66: Dichtung
- 67: Anzeige
- 68: Laufradgehäuse
- 69: Dichtung
- 70: Anzeige
- 71: Eingriffelemente
- 72: Wand
- 73: Kraftsensor
- 74: Membran
- 75: Vorsprung

## Patentansprüche

1. Anordnung mit einem Tank einer Maschine zur Zubereitung von Heißgetränken oder Kanne zur Aufbewahrung von Wasser und mit einer Vorrichtung zur Wasseraufbereitung umfassend zumindest eine Kartusche mit einem Ionenaustauschermaterial sowie Fördermittel zum Ansaugen von Wasser und Leiten des Wassers durch die Kartusche mit dem Ionenaustauschermaterial, wobei die Vorrichtung magnetische Mittel aufweist, um die Fördermittel durch eine Wand des Tanks oder der Kanne hindurch anzutreiben, weiter umfassend ein erstes Gehäuse und ein weiteres Gehäuse, welches auf der Außenseite des Tanks oder Kanne gegenüber einem ersten Gehäuse platziert ist und welches die magnetischen Mittel aufweist, um die Fördermittel anzutreiben und wobei sich stromführende Bauteile der Vorrichtung zur Wasseraufbereitung komplett außerhalb des Tanks oder der Kanne befinden.

2. Anordnung nach Anspruch 1, **dadurch gekennzeichnet, dass** die Fördermittel ein abnehmbares Laufrad umfassen.

3. Anordnung nach einem der vorstehenden Ansprüche, **dadurch gekennzeichnet, dass** erstes Gehäuse und zweites Gehäuse sich über magnetische Mittel anziehen und so an einer Wand des Behälters mit Wasser befestigbar sind.

4. Anordnung nach einem der vorstehenden Ansprüche, **dadurch gekennzeichnet, dass** die Fördermittel als Laufrad ausgebildet ist.

5. Vorrichtung zur Wasseraufbereitung nach einem der vorstehenden Ansprüche, **dadurch gekennzeichnet, dass** die Vorrichtung über einen Sensor aktivierbare Antriebsmittel umfasst.

6. Anordnung nach dem vorstehenden Anspruch, **dadurch gekennzeichnet, dass** der Sensor als Feuchtigkeitssensor, als Neigungsschalter, als Kraftsensor oder als Differenzdruckschalter ausgebildet ist.

7. Anordnung nach einem der vorstehenden Ansprüche, **dadurch gekennzeichnet, dass** die Vorrichtung nach Aktivierung für eine vorgegebene Zeitspanne Wasser durch eine Kammer mit dem Ionenaustauschermaterial fördert.

8. Anordnung nach einem der vorstehenden Ansprüche, **dadurch gekennzeichnet, dass** die Vorrichtung eine Anzeigeeinrichtung aufweist, welche ein notwendiges Wechseln des Ionenaustauschermaterials signalisiert.

## Claims

1. An assembly comprising a tank of a machine for preparing hot beverages or jug for storing water and comprising a device for water treatment comprising at least one cartridge with an ion exchange material as well as conveying means for suctioning water and guiding the water through the cartridge with the ion exchange material, wherein the device has magnetic means for driving the conveying means through a wall of the tank or the jug, further comprising a first housing and a further housing, which is placed on the outer side of the tank or jug opposite a first housing and which has the magnetic means to drive the conveying means and wherein current-carrying components of the device for water treatment are located completely outside of the tank or of the jug.

2. The assembly according to claim 1, **characterized in that** the conveying means comprise a removable rotor.

3. The assembly according to any one of the preceding claims, **characterized in that** first housing and second housing attract one another via magnetic means and can thus be fastened to a wall of the container with water.

4. The assembly according to any one of the preceding claims, **characterized in that** the conveying means is formed as rotor.

5. A device for water preparation according to any one of the preceding claims, **characterized in that** the device comprises a drive means, which can be activated via a sensor.

6. The arrangement according to the preceding claim, **characterized in that** the sensor is formed as moisture sensor, as tilt switch, as force sensor or a differential pressure switch.

7. The assembly according to any one of the preceding claims, **characterized in that**, after activation for a predetermined period of time, the device conveys water through a chamber comprising the ion exchange material.

8. The assembly according to any one of the preceding claims, **characterized in that** the device has a display device, which signals a necessary change of the ion exchange material.

## Revendications

1. Disposition avec un réservoir d'une machine pour la préparation de boissons chaudes ou carafe pour la conservation d'eau et avec un dispositif pour la préparation d'eau comprenant au moins une cartouche avec un matériau échangeur d'ions ainsi que des moyens de convoyage pour l'aspiration d'eau et la conduction d'eau par la cartouche avec le matériau échangeur d'ions, le dispositif présentant des moyens magnétiques pour actionner les moyens de convoyage par une paroi du réservoir ou de la carafe, comprenant en outre un premier boîtier et un deuxième boîtier qui est placé sur la face extérieure du réservoir ou de la carafe par rapport à un premier boîtier et qui présente les moyens magnétiques pour actionner les moyens de convoyage et des composants conducteurs du dispositif pour la préparation d'eau se trouvant complètement en dehors du réservoir ou de la carafe.

2. Disposition conformément à la revendication n°1, **caractérisée en ce que** les moyens de convoyage comprennent une roue amovible.

3. Disposition conformément à l'une des revendications précédentes, **caractérisée en ce que** le premier boîtier et le deuxième boîtier s'attirent par des moyens magnétiques et peuvent être ainsi fixés sur une paroi du réservoir contenant l'eau.

4. Disposition conformément à l'une des revendications précédentes, **caractérisée en ce que** les moyens de convoyage sont conçus sous forme de roue.

5. Dispositif pour la préparation d'eau conformément à l'une des revendications précédentes, **caractérisé en ce que** le dispositif comprend des moyens d'entraînement actionnables par une sonde.

6. Disposition conformément à la revendication précédente, **caractérisée en ce que** la sonde est conçue sous forme de capteur d'humidité, de contacteur d'inclinaison, de capteur de force ou de commutateur de pression différentielle.

7. Disposition conformément à l'une des revendications précédentes, **caractérisée en ce que** le dispositif achemine l'eau par un compartiment avec le matériau échangeur d'ions pendant un temps prédéfini après l'activation.

8. Disposition conformément à l'une des revendications précédentes, **caractérisée en ce que** le dispositif présente un moyen d'affichage qui signale un changement nécessaire du matériau échangeur d'ions.
**(Bsp:) 02291860.1** *(EP Anmeldenummer, Arial fett)*
***(Zeichnungen hier* einfügen*)***
